# EUROPEAN PATENT APPLICATION

(11) **EP 3 040 909 A1**
(43) Date of publication of application: **06.07.2016**
(21) Application number: 15150102.0
(22) Date of filing: 05.01.2015
(51) Int. Cl.: G06K 9/00

(54) **Method of providing an envelope with respect to a cluster**

(71) Applicant: Delphi Technologies, Inc., Troy MI 48007 (US)
(72) Inventor: Fistelmann, Stefan, 47057 Duisburg (DE); Iurgel, Uri, 42369 Wuppertal (DE); Ioffe, Alexander, D-53229 Bonn (DE)
(74) Representative: Delphi France SAS

(57) **Abstract**

A method of providing assistance data with respect to a vehicle, including determining a 2-dimensional map of an area relating to said vehicle, said map providing contours of objects located in said area, including the steps of: a) determining a set of points in 2-dimension space, each point representing a probable occupancy in the real world; b) identifying at least one cluster of points, and creating an envelope/hull for said cluster, wherein said envelope/hull includes at least one concave portion, wherein a portion of said at least one concave portion is established by the further steps of: c) pre-establishing a first portion of the envelope/hull comprising a first edge joining first and second points; d) rotating an imaginary line originating from said second point from an initial position co-incident with said first line, until said imaginary line intercepts a point in the cluster, and establishing said portion referred to in b) by joining said second point and said intercepted point, characterised wherein said imaginary line has a finite maximum length.

## Description

### Field of the Invention

This disclosure relates to mapping of objects in the real world and has particular but not exclusive application to mapping and determining the real world area in the vicinity of a vehicle, so as to obtain information such as the location of other vehicles, buildings, obstacles and such like.

### Background

In modern automotive applications, a vehicle may be equipped with one or more radar systems which provide data to the vehicle. Such data are provided as radar detections, essentially information regarding radar reflections and their originating position. These data can be used to provide a 2 dimensional map of objects in the vicinity of the vehicle. This map is often referred to as an occupancy grid.

The occupancy grid or map is often arranged in an array of cells, each representing a certain area within the real world. Each cell may be associated with a probability value with respect to that area/cell being occupied in the real world. Thus an object in the real world, such as a parked car, can be represented by a set of occupied cells; in other words by a set of pixels. A cell may be defined as occupied if its probability value is greater than a certain threshold.

In order to rationalise the data in the occupancy grid, it is useful to group the points which belong to the same object (such as a vehicle). When points belong to one group (object) they generally are clustered. So, for example, a parked car results in an occupancy grid where there is a set of clustered points (pixels).

For each cluster it is useful to create an envelope/contour for the cluster, and generally around the cluster and connecting peripheral points of the cluster. Such a contour is referred to alternatively as an envelope or hull. This is required for a wide range of applications and for different functions. For example contour extraction is required in order to define those areas in the map where the vehicle cannot go. Another purpose is to use the contours for object recognition, for example by comparing the contours with reference models of known objects such as vehicles. The invention described herein is not only suitable for cells in an occupancy grid but also for pixels in a picture or other forms of representation of a set of points.

It has been determined by the inventors that prior art techniques create a larger envelope than the reality, or create an envelope which is much too detailed for further processing.

It is an object of the invention to provide an improved method of providing contour/envelopes for objects which mirror the real world shape more closely. Such techniques allow for example, the actual space available to a vehicle for parking, for example, in the real world to be maximised.

It is a further object to make the method more efficient and provide for less complex envelopes without a large amount of data which increases processing power and time.

### Statement of the Invention

In one aspect is provided a method of providing assistance data with respect to a vehicle, including determining a 2-dimensional map of an area relating to said vehicle, said map providing contours of objects located in said area, including the steps of: a) determining a set of points in 2-dimension space, each point representing a probable occupancy in the real world; b) identifying at least one cluster of points, and creating an envelope/hull for said cluster, wherein said envelope/hull includes at least one concave portion, wherein a portion of said at least one concave portion is established by the further steps of: c) pre-establishing a first portion of the envelope/hull comprising a first edge joining first and second points; d) rotating an imaginary line originating from said second point from an initial position co-incident with said first line, until said imaginary line intercepts a point in the cluster, and establishing said portion referred to in b) by joining said second point and said intercepted point, characterised wherein said imaginary line has a finite maximum length.

The vehicle may be is equipped with radar means, said radar means adapted to provide said set of points in step a).

The 2-dimensional space may represent an area in the vicinity of said vehicle.

The envelope or hull may be used to provide a contour map of objects in the vicinity of a vehicle.

The contour map may be used to provide data to control the vehicle or direct the driver of the vehicle to find and drive through gaps or into available parking spaces.

Said imaginary line preferably has a minimum length.

Step d) may be repeated with respect to the points of the last determined edge.

The 2-dimensional space and/or an area bounding the region of the cluster may be is divided into sub-areas, and wherein in said step d) only those points in the same or adjacent sub-areas to that with respect to said second point are considered.

Sub-areas may be quadrants.

The dimensions of said quadrant are preferably 80-120% of the length of said imaginary line.

### Brief Description of Figures.

The invention will now be described by example and with reference to the following figures of which:
Figure 1a and 1b shows prior art methodology results which produce concave profiles/envelopes with respect to a set of clustered points (pixels).
Figures 2a and 2b show methodology and results from examples of the invention where profiles with at least one concave profile are determined.
Figure 3 illustrates how the known Jarvis-March algorithm is implemented.
Figure 4 shows methodology and results from examples of the invention where profiles with at least one concave profile are determined.
Figure 5 shows a preferred example of the invention.
Figure 6 shows a refinement according to one example of the invention
Figure 7 illustrates the processing chain according to one example of how the contour extraction data is obtained and provided to a vehicle according;
Figure 8 illustrates how the contour extraction data is obtained and provided to a vehicle according to another example;
Figures 9 illustrates a, b and c show 2 dimensional map of an ego vehicle in a typical narrow urban street where other vehicles are parked at the side and how contour data are extracted.

### Prior Art

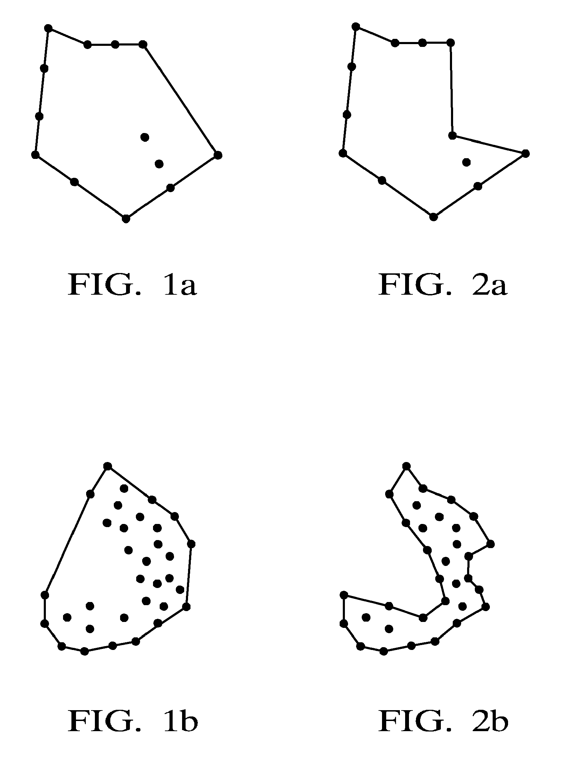

Figure 1a and 1b shows prior art methodology results which produce concave profiles/envelopes with respect to a set of clustered points (pixels). Methodology which provides such contours for a convex hull include Jarvis-March algorithm. The results of the Jarvis-March algorithm are shown in figure 1a; the convex hull produced has the disadvantage that it creates large empty spaces. In a map representing the environment of a vehicle it is important to find empty spaces for the car to drive through or park into. The Jarvis-March algorithm effectively is like wrapping a piece of string around the points.

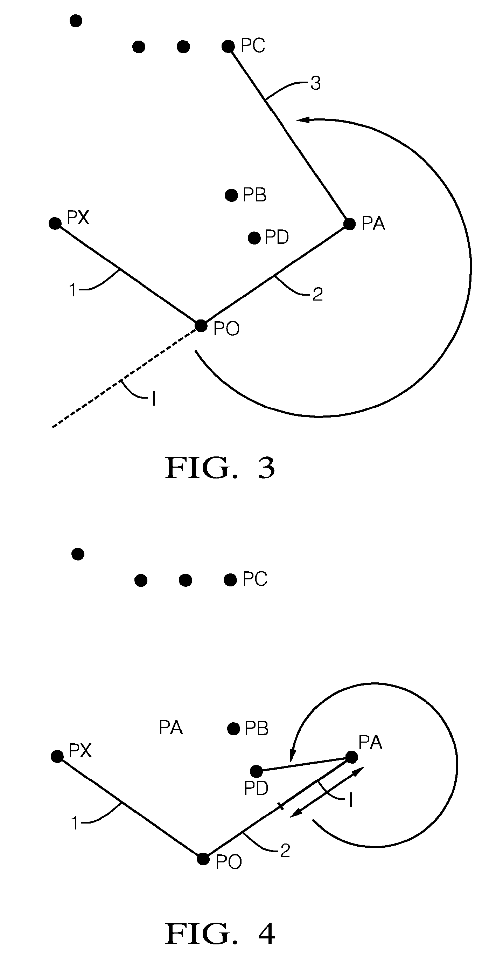

Figure 3 illustrates how the known Jarvis-March algorithm is implemented. A portion of the envelope has already been created providing two edges1 and 2. Edge 1 joins points PX and P0 and edge 2 joins points P0 and PA. In the Jarvis-March algorithm, an imaginary line I of infinite length, coincident with the edge 2 and whose origin is point PA, is swung round (in this example anti-clockwise) until it hits (i.e. intercepts) the next untouched point PC. The next edge 3 is provided form PA to PC.

### Description of the Invention

### Basic Example

In particular the present invention relates to provide an envelope with respect to a set of points which has an envelope profile with at least one concave portion.

Figures 2a and 2b and 4 show methodology and results from examples of the invention where profiles with at least one concave profile are determined.

The difference between a concave and a convex hull is that while the convex hull includes all points within its boundary the concave hull tries to adapt to the form of the original object represented by the cluster. This allows use of spaces that would otherwise not appear in the concave methodology.

A concave hull is produced according to one example of the methodology as in figure 4. The methodology introduces a maximum distance threshold for the imaginary line I. In one simple example the imaginary line is made as small as possible, and can be increased, and/until the next point found. In the figure the next point when rotating line I anti-clockwise is PD which is effectively the closest point to PA; so the point PD is found as it is the closest point to PA and the next edge of the contour/hull is defined as PA to PD. This creates a concave profile as shown. In the next steps the next edges found are PA-PB and then PB-PC. Generally in such examples the imaginary line has a maximum length.

### Preferred example

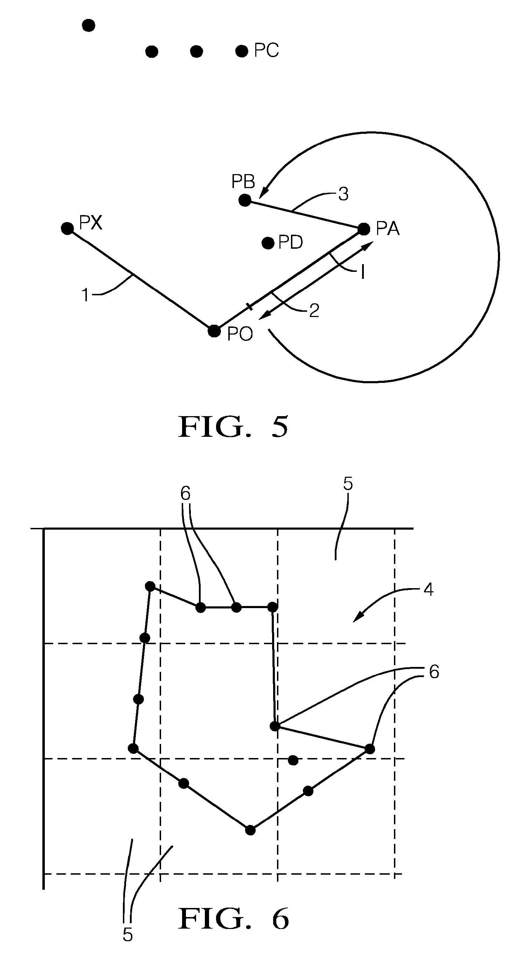

The method described above tends to include many points in the contour and gives a high resolution. The method used to produce this high resolution means forming a hull which touches all peripheral points and so increases the data. However, if a indent/concave portion of an object is too small for a vehicle to fit into if requiring parking, it is not necessary to include this space in the hull/contour. This is a preferred example, will now be described, a hull/contour is produced which has concave portions but which methodology reduces the amount of points and thus data for further processing. Figure 5 shows such an example which produces a hull with concave portions but limits the data points through in the hull/periphery. According to this, a further threshold is introduced so that the distance between points (i.e. the edges) of the hull/contour is also above a minimum. In such a method, the imaginary line I originating from PA is rotated anti-clockwise as before until it intercepts a point in the cluster, wherein said imaginary line has both a finite maximum, as well as minimum length. In this case the minimum length is set, and in the example is longer than the distance PA-PD. The maximum length is shorter than the distance PC to PA so the next point found is PB.

Thus the next portion (edge) 3 is establishing by joining said second point PA and said intercepted point PB. This produces a profile as shown in figure 5. Point PD is left out of the profile.

### Further Refinement

In yet a further preferred embodiment, the methodology is refined to reduce the amount of processing. If there are a lot of points in a cluster, it can take a lot of processing to determine the next point in the profile/hull to join the edge to.

In one example in order to reduce this problem, the whole set of points (map), or a portion in the region of the cluster, or the cluster itself, is divided into sub-areas. Instead of considering all points when determining the next point to join up the edge to, only those are considered which lie within the same sub-area or an adjacent sub-area are considered. The technique is particularly advantageous where the cluster contains a large number of points or is large in area.

Figure 6 illustrates an example of this refinement. The region around the cluster 4 is divided into sub-areas 5 which in this case are squares (quadrants). Each point 6 is designated therefore to one sub-area.

Essentially only those points in the same or adjacent sub-areas to that with respect to said second point are considered in the above methodologies.

It is to be reiterated that according to examples the contour (i.e. the envelope or hull) found with respect to the object, does not necessarily need to be complete in respect that it is closed. It does therefore not need to fully envelope the object. Examples of the invention may just determine a portion or a part surface of the object. In some aspects there may be a large object such as a building; the radar reflections providing the pixels may not be able to determine the whole surface of the object and in many cases, only the salient portion/surface is required. For example only the contour or hull of an internal portion of a wall bounding a parking lot is often only required.

The following will now describe practical implementation of aspects of the invention which are applicable in the automotive field.

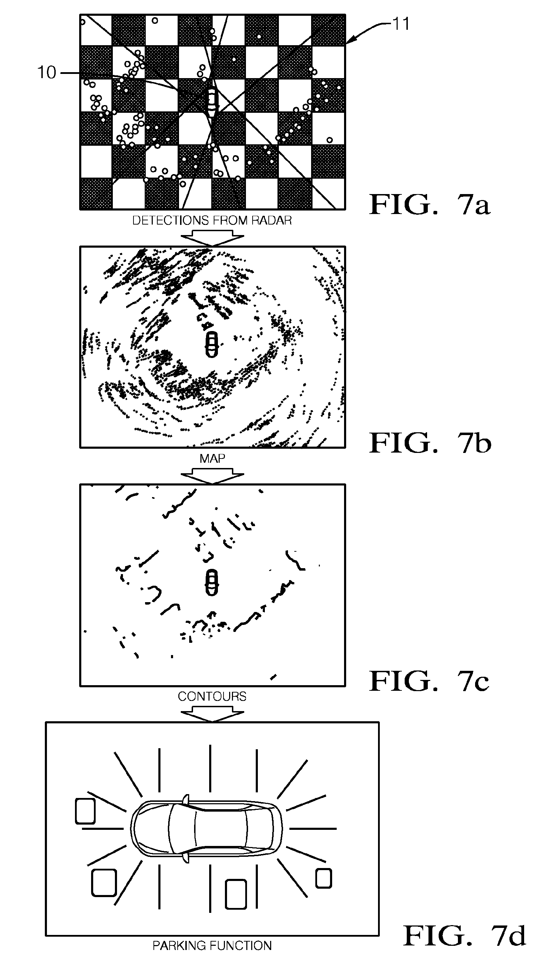

Figure 7 illustrates how the contour extraction data is obtained and provided to a vehicle. Figure 7a shows a plan view of a vehicle 10 located in an area 11, such as a parking lot. The vehicle may be equipped with radar apparatus which can scan the area in its vicinity. The radar may be equipped with forward looking radar and/or additionally side looking radar and/or rear looking radar such that an area of 360 degrees around the car can be scanned. The radar provides reflection data from objects such as other vehicle buildings wall and such like in the vehicle's vicinity. The raw data obtained by the vehicle radar systems provides a set of radar reflections. If the area is divided into an area of certain resolution comprising essentially finite pixels, the radar data is processed to be provided as a 2 dimensional map where each pixel is designated as occupied if the radar return suggests that there is a certain probability that the pixel is occupied. So essentially as seen in figure 7b a map is provided with a number of "occupied" pixels.

If it is assumed that clusters of pixels represents objects i.e. radar reflections from the same object, such as a vehicle, then one task is to identify such clusters and provide an envelope/hull i.e. contours with respect to the cluster so as to demark the object boundary or a portion thereof. According to examples of the object this is performed using methods described above, so as to produce contour or envelope data as seen in figure 7c. Thus contour/envelope data can then be used by the vehicle systems for various reasons and functionality such as to determine parking spaces or assist a vehicle in passing through gaps - see figure 7d. Of course the contour maps can be used for other purposes.

By providing envelopes with concave profiles allows optimum use of actual space in the 2-dimensional environment as it can show spaces or gaps which in prior art systems do not appear.

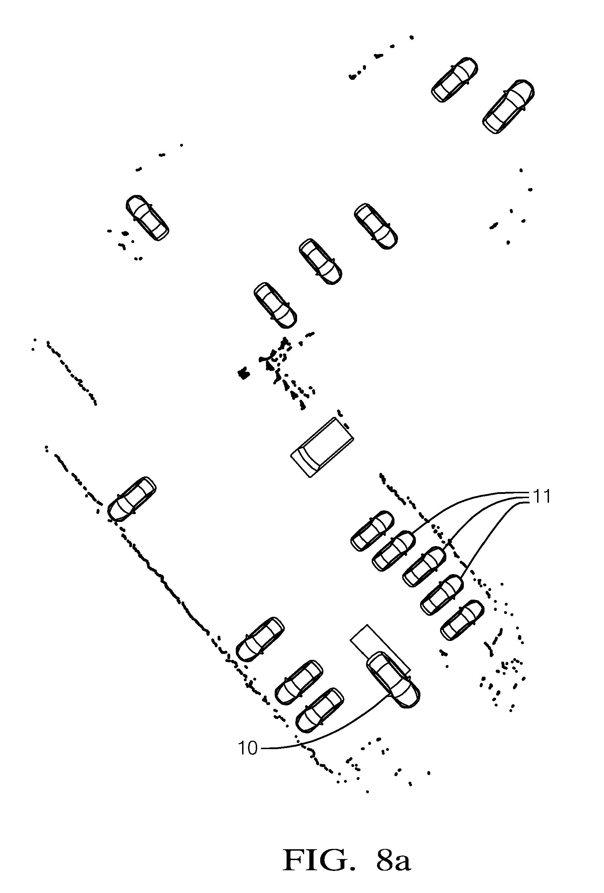

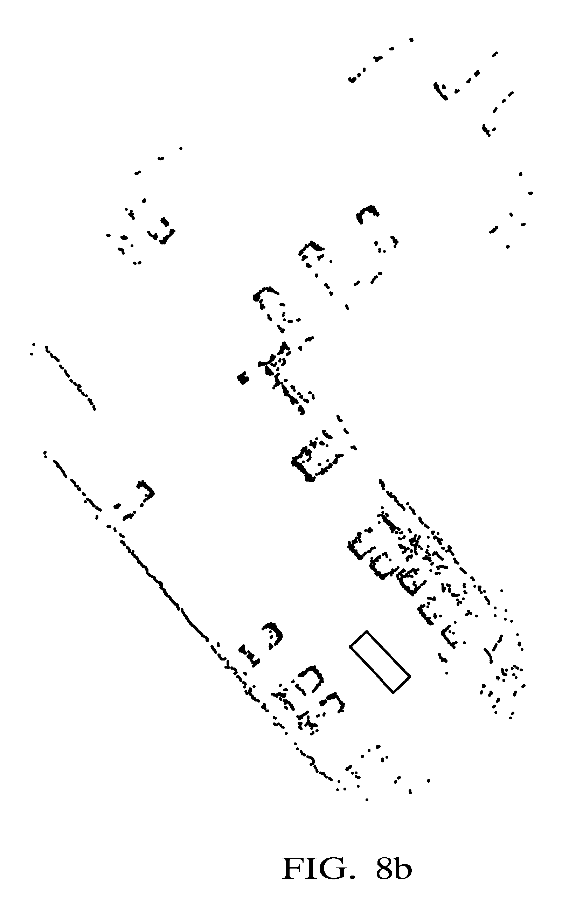

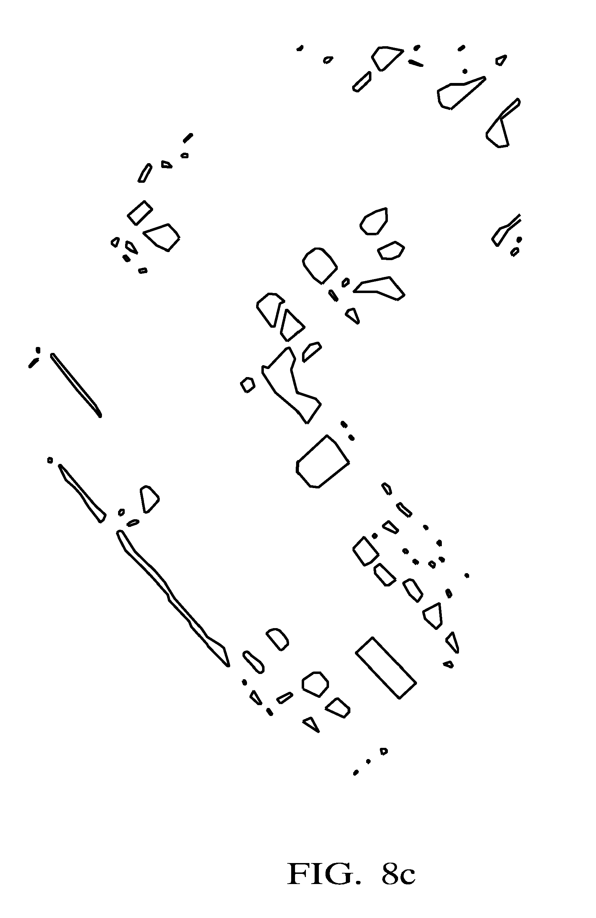

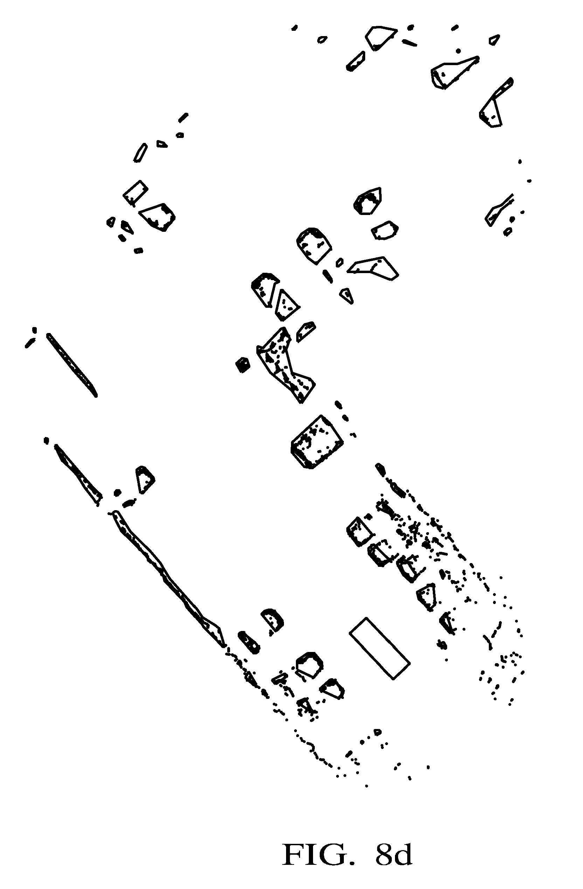

Figure 8a shows an ego vehicle 10 in a parking lot where other vehicles 12 are parked. Examples of the invention can be used to obtain more accurate and more useful profiles of objects such as other vehicles (or any other objects in the parking lot) so as to e.g. inform the vehicle system or driver that space is available to park or gaps are available to drive through. Figure 8b shows the radar data obtained and is effectively a set of pixels in a 2-D map. This data is then processed using the above methods to provide contour data as shown in figure 8c. Figure 8d shows the contour along with both the pixels set from the radar data.

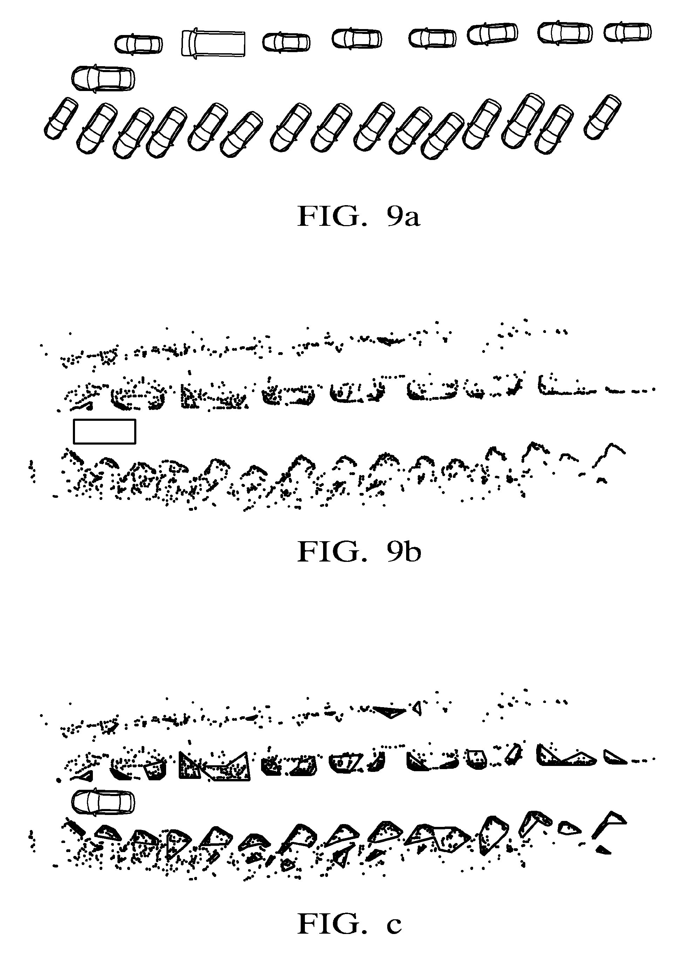

Figures 9a, b and c show 2 dimensional map of an ego vehicle 10 in a typical narrow urban street where other vehicles are parked at the side as shown, either at 45 degrees or in the same axis as the street, Figure 9b shows a set of radar reflection data (occupied pixels) obtained from this (i.e. the data used for contour extraction) and figure 9 c shows the contours provided by methods according to the invention which provide envelopes or hulls around or with respect to a salient portion of the vehicle.

There are several advantages of the invention. As the environment can be presented with few connected points, but is still exact, less data is needed to communicate the environment to other devices, saving bandwidth, and therefore cost. Thus examples provide an efficient way of representing the environment as few points of the contour describe the environment. Thus in examples can be provided an embedded system with less processing power needed to process that information.

Aspects of the environment can provide optimal solutions suited for automated driving, so as e.g. to find gaps for parking spaces, but do not find too small gaps where the car cannot drive anywhere

The parameters used in examples of the invention are intuitive as opposed to prior art systems where often the there are several parameters to tune. According to aspects, only the parameters of distance threshold and optionally, the size of the cluster are considered. These are related to real world measures (e.g. maximum car width or maximum car length). These can easily be changed and on-the-fly so as to e.g. adapt for cars/trucks or adapt to different driving situations, e.g. urban (narrow streets) vs. highway (wider streets)

## Claims

1. A method of providing assistance data with respect to a vehicle, including determining a 2-dimensional map of an area relating to said vehicle, said map providing contours of objects located in said area, including the steps of:
a) determining a set of points in 2-dimension space, each point representing a probable occupancy in the real world;
b) identifying at least one cluster of points, and creating an envelope/hull for said cluster, wherein said envelope/hull includes at least one concave portion, wherein a portion of said at least one concave portion is established by the further steps of:
c) pre-establishing a first portion of the envelope/hull comprising a first edge joining first and second points;
d) rotating an imaginary line originating from said second point from an initial position co-incident with said first line, until said imaginary line intercepts a point in the cluster, and establishing said portion referred to in b) by joining said second point and said intercepted point,
characterised wherein said imaginary line has a finite maximum length.

2. A method as claimed in claim 1 wherein said vehicle is equipped with radar means, said radar means adapted to provide said set of points in step a).

3. A method as claimed in any of claims 1 or 2 wherein said 2-dimensional space represents an area in the vicinity of said vehicle.

4. A method as claimed in any preceding claim wherein said envelope or hull is used to provide a contour map of objects in the vicinity of a vehicle.

5. A method as claimed in any preceding claim wherein said contour map is used to provide data to control the vehicle or direct the driver of the vehicle to find and drive through gaps or into available parking spaces.

6. A method as claimed in any preceding claim wherein said imaginary line has a minimum length.

7. A method as claimed in any preceding claim wherein step d) is repeated with respect to the points of the last determined edge.

8. A method as claimed in any preceding claim wherein the 2-dimensional space and/or an area bounding the region of the cluster is divided into sub-areas, and wherein in said step d) only those points in the same or adjacent sub-areas to that with respect to said second point are considered.

9. A method as claimed in claim 8 wherein sub-areas are quadrants.

10. A method as claimed in claim 9 wherein the dimensions of said quadrant are 80-120% of the length of said imaginary line.
